(19) Europäisches Patentamt / European Patent Office / Office européen des brevets

(11) **EP 2 579 983 B2**

(12) **NEW EUROPEAN PATENT SPECIFICATION**

After opposition procedure

(45) Date of publication and mention
of the opposition decision:
**09.08.2023 Bulletin 2023/32**

(45) Mention of the grant of the patent:
**07.03.2018 Bulletin 2018/10**

(21) Application number: **11792036.3**

(22) Date of filing: **09.06.2011**

(51) International Patent Classification (IPC):
**B01J 23/46** (2006.01)     **B01J 37/00** (2006.01)
**B01J 35/02** (2006.01)     **B01D 53/94** (2006.01)
**B01J 23/63** (2006.01)     **B01J 37/02** (2006.01)
**B01J 23/58** (2006.01)

(52) Cooperative Patent Classification (CPC):
**B01J 37/0244; B01D 53/9422; B01J 23/58;**
**B01J 23/63; B01J 35/023; B01J 37/0036;**
**B01J 37/0248;** B01D 2255/1021; B01D 2255/1023;
B01D 2255/1025; B01D 2255/2042;
B01D 2255/2047; B01D 2255/2065;
B01D 2255/20715; B01D 2255/2092;     (Cont.)

(86) International application number:
**PCT/IB2011/052511**

(87) International publication number:
**WO 2011/154912 (15.12.2011 Gazette 2011/50)**

(54) **NOX STORAGE CATALYST SYSTEM WITH REDUCED RH LOADING**

NOX-SPEICHER-KATALYSATORSYSTEM MIT REDUZIERTER RH-LADUNG

SYSTÈME DE CATALYSEUR DE STOCKAGE DE NOX À CHARGE EN RH RÉDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.06.2010 EP 10165529**

(43) Date of publication of application:
**17.04.2013 Bulletin 2013/16**

(73) Proprietor: **BASF SE**
**67056 Ludwigshafen am Rhein (DE)**

(72) Inventor: **HILGENDORFF, Marcus**
**30539 Hannover (DE)**

(74) Representative: **Altmann Stößel Dick
Patentanwälte PartG mbB
Isartorplatz 1
80331 München (DE)**

(56) References cited:
WO-A1-2010/012677     WO-A2-2004/002621
JP-A- H0 985 091     JP-A- 2005 205 302
JP-A- 2010 005 591     US-A1- 2003 103 886
US-A1- 2004 151 645     US-A1- 2005 129 601
US-A1- 2005 282 701     US-A1- 2009 320 457
US-B1- 6 413 483

EP 2 579 983 B2

**(Cont. next page)**

(52) Cooperative Patent Classification (CPC): (Cont.)
B01D 2255/9022; B01D 2255/91; B01J 23/464

**Description**

TECHNICAL FIELD

The present invention relates to a treatment system for an automobile exhaust gas stream.

BACKGROUND

The emission of nitrogen oxides ("NO$_x$") from lean-burn engines must be reduced in order to meet emission regulation standards. Conventional three-way conversion ("TWC") automotive catalysts are suitable for abating NO$_x$, carbon monoxide ("CO") and hydrocarbon ("HC") pollutants in the exhaust of engines operated at or near stoichiometric air/fuel conditions.

Engines, especially gasoline-fueled engines, are being designed to operate under lean conditions as a fuel economy measure. Such engines are referred to as "lean-burn engines". That is, the ratio of air to fuel in the combustion mixtures supplied to such engines is maintained considerably above the stoichiometric ratio so that the resulting exhaust gases are "lean", i.e., the exhaust gases are relatively high in oxygen content.

Although lean-burn engines provide enhanced fuel economy, they have the disadvantage that conventional TWC catalysts are not effective for reducing NO$_x$ emissions from such engines because of excessive oxygen in the exhaust. Attempts to overcome this problem have included operating lean-burn engines with brief periods of fuel-rich operation (engines which operate in this fashion are sometimes referred to as "partial lean-burn engines"). The exhaust of such engines is treated with a catalyst/NO$_x$ sorbent (nitrogen oxide storage catalyst) which stores NO$_x$ during periods of lean (oxygen-rich) operation, and releases the stored NO$_x$ during the rich (fuel-rich) periods of operation. During periods of rich (or stoichiometric) operation, the catalyst component of the catalyst/NO$_x$ sorbent promotes the reduction of NO$_x$ to nitrogen by reaction of NO$_x$ (including NO$_x$ released from the NO$_x$ sorbent) with HC, CO and/or hydrogen present in the exhaust gas.

WO 2008/067375, for example, discloses a nitrogen oxide storage catalyst having a washcoat layer provided on a substrate, wherein said washcoat layer contains Rh and further elements which form a composition which is active in the abatement of nitrogen oxide by trapping and conversion thereof.

US 2009/320457 A1 discloses a lean NO$_x$ trap catalyst composition comprising distinct layers, wherein the top layer is free of any alkali or alkaline earth NO$_x$ trapping components and the under layer may contain any desirable NO$_x$ trapping component in contact with a precious metal group catalyst.

US 2005/129601 A1 discloses an emission treatment system for an exhaust stream comprising a NO$_x$ storage reduction (NSR) catalyst with an NO$_x$ sorbent and a platinum group metal component dispersed on a refractory metal oxide support; and an SCR catalyst disposed downstream of the NSR catalyst.

US 6,413,483 B1 discloses a catalytic converter for a lean-burn engine comprising a supported layered catalyst having a first layer containing platinum, potassium and a barium NO$_x$ storage component, second layer containing rhodium and interlayer containing a barium compound.

US 2003/103886 A1 discloses a catalytic configuration comprising a substrate, an underlayer comprising a first catalyst composition and an overlayer comprising a second catalyst composition comprising Rh.

There, however, remains a need for improved nitrogen oxide storage catalysts, in particular with respect to the efficiency in the abatement of nitrogen oxide at lower temperatures, i.e. during the cold-start periods of automotive exhaust gas treatment. Furthermore, in view of the costly platinum group metals contained in nitrogen oxide storage catalysts, there is a need to reduce the amounts thereof which are necessary for meeting emission regulation standards.

DESCRIPTION

In this respect, it has surprisingly been found that a treatment system with a NOx storage catalyst design according to the present invention which involves lower loadings of platinum group metals, in particular of Rh, affords improved performance with respect to the abatement of nitrogen oxide, especially during the cold-start period of the exhaust treatment process.

Thus, the present invention relates to a treatment system for an automobile exhaust gas stream, comprising:

a combustion engine which operates periodically between lean and rich conditions;
an exhaust gas conduit in communication with the engine; and
a nitrogen oxide storage catalyst provided within the exhaust gas conduit, said nitrogen oxide storage catalyst comprising:

a substrate;

a first washcoat layer disposed on the substrate, the first washcoat layer comprising metal oxide support particles and a nitrogen oxide storage material comprising at least one metal compound selected from the group consisting of alkaline earth metal compounds, alkali metal compounds, rare earth metal compounds, and mixtures thereof, at least a portion of said at least one metal compound being supported on the metal oxide support particles; and a second washcoat layer disposed over the first washcoat layer, said second washcoat layer comprising Rh, wherein the first washcoat layer contains 0.001 wt.-% or less of Rh, and wherein the second washcoat layer is disposed on 100 - x % of the surface of the first washcoat layer, x ranging from 20 to 80, and

wherein the nitrogen oxide storage catalyst further comprises a third washcoat layer which comprises Pd and which is disposed onto at least a portion of the first washcoat layer, onto which the second washcoat layer is not disposed, wherein the third washcoat layer contains 0.001 wt.-% or less of Rh, and wherein the substrate comprises a honeycomb substrate comprising a plurality of longitudinally extending passages formed by longitudinally extending walls bounding and defining said passages, wherein the first washcoat layer onto 100 - x % of the surface of which the second washcoat layer is disposed is the first washcoat layer of the inlet passages of the honeycomb substrate, wherein the second washcoat layer is disposed on the first portion of said first washcoat layer extending from the inlet end of the honeycomb substrate (front section).

As the substrate, any material may be used provided that it may support the washcoat layers of the nitrogen oxide storage catalyst of the inventive treatment system and that it is resistant to the conditions which reign during the exhaust gas treatment process. Suitable substrates include any of those materials typically used for preparing catalysts, and will usually comprise a ceramic or metal honeycomb structure.

The substrate according to the present invention may be of any conceivable shape, provided that it allows for the fluid contact with at least a portion of the washcoat layers present thereon. Preferably, the substrate is a monolith, wherein more preferably the monolith is a flow-through monolith. Accordingly, the monolithic substrate preferably contains fine, parallel gas flow passages extending from an inlet to an outlet face of the substrate, such that passages are open to fluid flow. Such substrates are commonly referred to as honeycomb flow through substrates. The passages, which are essentially straight paths from their fluid inlet to their fluid outlet, are defined by walls on which the washcoats are disposed, so that the gases flowing through the passages contact the catalytic material. The flow passages of the monolithic substrate are thin-walled channels, which can be of any suitable cross-sectional shape and size such as trapezoidal, rectangular, square, sinusoidal, hexagonal, oval, or circular. Such structures may contain from 60 to 400 or more gas inlet openings (i.e., cells) per square inch of cross section.

Thus according to a preferred embodiment of the present invention, the nitrogen oxide storage catalyst of the inventive treatment system comprises a monolith as the substrate, preferably a flow-through monolith, and more preferably a flow-through monolith having a honeycomb-structure.

The substrate can be made from materials commonly known in the art. For this purpose, porous materials are preferably used as the substrate material, in particular ceramic and ceramic-like materials such as cordierite, $\alpha$-alumina, an aluminosilicate, cordierite-alumina, silicon carbide, aluminum titanate, silicon nitride, zirconia, mullite, zircon, zircon mullite, zircon silicate, sillimanite, a magnesium silicate, petalite, spodumene, alumina-silica-magnesia and zirconium silicate, as well as porous refractory metals and oxides thereof. According to the present invention, "refractory metal" refers to one or more metals selected from the group consisting of Ti, Zr, Hf, V, Nb, Ta, Cr, Mo, W, and Re. The substrate may also be formed of ceramic fiber composite materials. According to the present invention, the substrate is preferably formed from cordierite, silicon carbide, and/or from aluminum titanate. In general, materials are preferred which are able to withstand the high temperatures to which a NOx storage catalyst is exposed to, in particular when used in the treatment of automotive exhaust gas.

The substrates useful for the catalysts of embodiments of the present invention may also be metallic in nature and be composed of one or more metals or metal alloys. The metallic substrates may be employed in various shapes such as corrugated sheet or monolithic form. Suitable metallic supports include the heat resistant metals and metal alloys such as titanium and stainless steel as well as other alloys in which iron is a substantial or major component. Such alloys may contain one or more of nickel, chromium and/or aluminum, and the total amount of these metals may advantageously comprise at least 15 wt.-% of the alloy, e.g., 10-25 wt.-% of chromium, 3-8 wt.-% of aluminum and up to 20 wt.-% of nickel. The alloys may also contain small or trace amounts of one or more other metals such as manganese, copper, vanadium, titanium and the like. The surface or the metal substrates may be oxidized at high temperatures, e.g., 1000°C and higher, to improve the resistance to corrosion of the alloys by forming an oxide layer on the surfaces the substrates. Such high temperature-induced oxidation may enhance the subsequent adherence of the washcoat compositions to the substrate.

In principle, any metal oxide support particles may be used in the first washcoat layer, provided that they can withstand the conditions encountered during the treatment of automotive exhaust gas, in particular with respect to the temperatures incurred by the NOx storage catalyst. Preferably, the metal oxide support particles comprise at least one metal oxide selected from the group consisting of alumina, zirconia, zirconia-alumina, baria-alumina, lanthana-alumina, lanthana-zirconia-alumina, and mixtures thereof. More preferably, the metal oxide particles comprise zirconia-alumina and/or lanthana-alumina, even more preferably zirconia-alumina.

According to preferred embodiments of the present invention, the metal oxide support particles comprised in the first washcoat layer may be doped with one or more compounds. Thus, the metal oxide support particles, preferably alumina, comprised in the first washcoat layer are preferably doped with zirconia. In principle, the metal oxide support particles may be doped with any possible amount of zirconia, preferably with 0.5 to 40% zirconia, more preferably with from 1 to 30%, more preferably with from 5 to 25%, and even more preferably with from 10 to 20%.

According to the present invention, the particle size ($d_{90}$) of the metal oxide support particles comprised in the first washcoat layer preferably ranges from 5 to 20 $\mu$m, more preferably from 8 to 14 $\mu$m, more preferably from 9 to 13 $\mu$m, and even more preferably from 10 to 12 $\mu$m. Within the meaning of the present invention a particle size "$d_{90}$" refers to the equivalent diameter where 90% of the number of particles per volume have a smaller diameter.

Furthermore, according to the present invention, the surface area of the metal oxide support particles may range from 50 to 350 $m^2$/g, wherein preferably, the surface area ranges from 100 to 300 $m^2$/g, more preferably from 130 to 270 $m^2$/g, more preferably from 150 to 230 $m^2$/g, and even more preferably from 170 to 190 $m^2$/g. Within the meaning of the present invention, the surface area generally refers to the BET surface area, preferably to the BET surface area determined according to DIN 66135.

Regarding the nitrogen oxide storage material comprised in the first washcoat layer, it is further preferred that said material comprises at least one element selected from the group consisting of Li, Na, K, Rb, Cs, Mg, Ca, Sr, Ba, Ce, La, Pr, Nd, and mixtures thereof, preferably at least one element selected from the group consisting of Mg, Ba, Ce, and mixtures thereof, more preferably Ba and/or Ce.

According to a particularly preferred embodiment, the nitrogen oxide storage material comprises a cerium compound and a barium compound, preferably ceria and barium carbonate, wherein the ceria : barium carbonate weight ratio preferably ranges from 1 : 1 to 1 : 20, more preferably of from 1 : 2 to 1 : 15, more preferably of from 1:3 to 1:10, and even more preferably of from 1 : 3.5 to 1 : 5.

With respect to said particularly preferred embodiment, barium carbonate is preferably at least partially supported on particles comprising ceria, wherein the resulting particles preferably have a particle size ($d_{90}$) which ranges from 5 to 20 $\mu$m, more preferably from 8 to 14 $\mu$m, more preferably from 9 to 13 $\mu$m, and even more preferably from 10 to 12 $\mu$m.

In general, the nitrogen oxide storage material may have any possible surface area, wherein according to a preferred embodiment, the surface area of the nitrogen oxide storage material ranges from 25 to 100 $m^2$/g, more preferably from 30 to 80 $m^2$/g, more preferably from 40 to 60 $m^2$/g, and even more preferably from 45 to 55 $m^2$/g.

According to the present invention, it is further preferred that the first washcoat layer comprises at least one platinum group metal selected from the group consisting of platinum, palladium, iridium, and mixtures thereof. Preferably, the at least one platinum group metal is at least partially supported on the metal oxide support particles, wherein more preferably, different types of platinum group metals are supported on separate metal oxide support particles. In particular, it is preferred that the first washcoat layer comprises Pd and/or Pt, preferably Pd and Pt.

In preferred embodiments of the present invention wherein the nitrogen oxide storage catalyst of the inventive treatment system comprises Pd, it is further preferred that the total loading of Pd in the catalyst ranges from 0.18 to 0.88 g/l (5 to 25 g/ft$^3$). More preferably, the total loading of Pd in the nitrogen oxide storage catalyst of the inventive treatment system ranges from 0.28 to 0.71 g/l (8 to 20 g/ft$^3$), more preferably from 0.35 to 0.60 g/l (10 to 17 g/ft$^3$), more preferably from 0.39 to 0.57 g/l (11 to 16 g/ft$^3$), more preferably from 0.42 to 0.53 g/l (12 to 15 g/ft$^3$), and even more preferably from 0.46 to 0.49 g/l (13 to 14 g/ft$^3$).

Furthermore, in preferred embodiments of the present invention, wherein the nitrogen oxide storage catalyst of the inventive treatment system comprises Pt, it is further preferred that the total loading of Pt in the catalyst is ranges from 0.18 to 7.06 g/l (5 to 200 g/ft$^3$). More preferably, the total loading of Pt in the nitrogen oxide storage catalyst of the inventive treatment system ranges from 0.71 to 5.30 g/l (20 to 150 g/ft$^3$), more preferably from 1.41 to 4.24 g/l (40 to 120 g/ft$^3$), more preferably from 1.77 to 3.53 g/l (50 to 100 g/ft$^3$), more preferably from 2.12 to 2.83 g/l (60 to 80 g/ft$^3$), and even more preferably from 2.30 to 2.65 g/l (65 to 75 g/ft$^3$).

Concerning the total loading of the first washcoat layer according to the present invention, any possible loading may be chosen in principle. In general, the loading of the first washcoat layer in the nitrogen oxide storage catalyst of the inventive treatment system may range from 31 to 1220 g/l (0.5 to 20 g/in$^3$), wherein the loading preferably ranges from 61 to 915 g/l (1 to 15 g/in$^3$), more preferably from 183 to 610 g/l (3 to 10 g/in$^3$), more preferably from 244 to 488 g/l (4 to 8 g/in$^3$), more preferably from 305 to 427 g/l (5 to 7 g/in$^3$), and even more preferably from 336 to 366 g/l (5.5 to 6.0 g/in$^3$).

According to the present invention, the first washcoat layer of the nitrogen oxide storage catalyst of the inventive treatment system comprises substantially no Rh. Within the meaning of the present invention, a material is defined as not comprising a substantial amount of a specific element when it contains 0.001 wt.-% or less of said element, preferably 0.0005 wt.-% or less, more preferably 0.00001 wt.-% or less, more preferably 0.000005 wt.-% or less, and even more preferably 0.000001 wt.-% or less thereof.

Regarding the second washcoat layer, said layer is disposed on 100-x% of the surface of the first washcoat layer, wherein x ranges from 20 to 80, x preferably ranging from 25 to 75, more preferably from 30 to 70, more preferably from 35 to 65, more preferably from 40 to 60, more preferably from 45 to 55, and even more preferably from 48 to 52.

According to the nitrogen oxide storage catalyst of the inventive treatment system, the washcoat layers are provided on the substrate in any conceivable fashion, wherein the first and second washcoat layers are preferably both disposed on the substrate starting from one end and/or side of the substrate body. According to a particularly preferred embodiment, said layers are provided on the substrate as continuous layers, wherein a continuous layer according to the present invention preferably refers to a layer which is uninterrupted along its entire length.

In general, the loading of Rh in the second washcoat layer may have any possible value, wherein the loading may range from 0.02 to 0.35 g/l (0.5 to 10 g/ft$^3$). According to a preferred embodiment, the loading of Rh in the second washcoat layer ranges from 0.04 to 0.28 g/l (1 to 8 g/ft$^3$), more preferably from 0.07 to 0.21 g/l (2 to 6 g/ft$^3$), more preferably from 0.09 to 0.19 g/l (2.5 to 5.5 g/ft$^3$), more preferably from 0.11 to 0.18 g/l (3 to 5 g/ft$^3$), and even more preferably from 0.12 to 0.16 g/l (3.5 to 4.5 g/ft$^3$).

Regarding the total loading of Rh in the nitrogen oxide storage catalyst of the inventive treatment system according to the present invention, said total loading may range from 0.01 to 0.18 g/l (0.25 to 5 g/ft$^3$). According to a preferred embodiment, the total loading of Rh ranges from 0 02 to 0.18 g/l (0.5 to 5 g/ft$^3$), more preferably from 0.04 to 0.11 g/l (1 to 3 g/ft$^3$), more preferably from 0.04 to 0.10 g/l (1.25 to 2.75 g/ft$^3$), more preferably from 0.05 to 0.09 g/l (1.5 to 2.5 g/ft$^3$), and even more preferably from 0.06 to 0.08 g/l (1.75 to 2.25 g/ft$^3$).

Concerning the total loading of the second washcoat layer according to the present invention, any possible loading may be chosen in principle. In general, the loading of the second washcoat layer in the nitrogen oxide storage catalyst of the inventive treatment system may range from 3 to 305 g/l (0.05 to 5 g/in$^3$), preferably from 6-122 g/l (0.1 to 2 g/in$^3$), more preferably from 12 to 92 g/l (0.2 to 1.5 g/in$^3$), more preferably from 18 to 61 g/l (0.3 to 1 g/in$^3$), more preferably from 24 to 37 g/l (0.4 to 0.6 g/in$^3$), and even more preferably from 27 to 34 g/l (0.45 to 0.55 g/in$^3$). According to the present invention, it is particularly preferred that the loading of the second washcoat layer in the portion of the catalyst containing the second washcoat layer is less than the loading of the first washcoat layer onto which it is disposed.

According to the present invention, it is further preferred that the second washcoat layer comprises metal oxide support particles on which Rh is at least partially supported.

In principle, any metal oxide particles may be used in the second washcoat layer, wherein metal oxide support particles are preferred which comprise at least one metal oxide selected from the group consisting of alumina, zirconia, zirconia-alumina, baria-alumina, lanthana-alumina, lanthana-zirconia-alumina, and mixtures thereof, preferably wherein the metal oxide support particles comprise zirconia-alumina and/or lanthana-alumina, more preferably zirconia-alumina

As for the metal oxide particles of the first washcoat layer, the metal oxide support particles comprised in the second washcoat layer may be doped with one or more compounds. Thus, the metal oxide support particles, preferably alumina, comprised in the second washcoat layer are preferably doped with zirconia. In principle the metal oxide support particles of the second washcoat layer may be doped with any possible amount of zirconia, wherein the metal oxide support particles are preferably doped with 0.5 to 40% zirconia, more preferably with from 1 to 30%, more preferably with from 5 to 25%, and even more preferably with from 10 to 20% zirconia.

According to particularly preferred embodiments of the present invention, the first and second washcoat layer of the nitrogen oxide storage catalyst of the inventive treatment system comprise alumina doped with zirconia, wherein more preferably alumina comprised in the first washcoat layer is alumina doped with from 1 to 30 % zirconia, more preferably from 5 to 20 %, more preferably from 7 to 15 %, more preferably from 8 to 12 %, and even more preferably from zirconia 9 to 11 %, and alumina comprised in the second washcoat layer is alumina doped with from 1 to 50 % zirconia, more preferably from 5 to 40 %, more preferably from 10 to 30 %, more preferably from 15 to 25 %, more preferably from 18 to 22 %, and even more preferably from zirconia 19 to 21 %.

According to the present invention, it is further preferred that the particle size ($d_{90}$) of the metal oxide support particles comprised in the second washcoat layer ranges from 5 to 20 $\mu$m, preferably from 8 to 14 $\mu$m, more preferably from 9 to 13 $\mu$m, and even more preferably from 10 to 12 $\mu$m.

In general, the loading of Pd in the third washcoat layer may have any possible value, wherein the loading may range from 0.18 to 1.06 g/l (5 to 30 g/ft$^3$). According to a preferred embodiment, the loading of Pd in the third washcoat layer ranges from 0.35 to 0.88 g/l (10 to 25 g/ft$^3$), more preferably from 0.46 to 0.74 g/l (13 to 21 g/ft$^3$), more preferably from 0.53 to 0.67 g/l (15 to 19 g/ft$^3$), more preferably from 0.57 to 0.64 g/l (16 to 18 g/ft$^3$), and even more preferably from 0.58 to 0.62 g/l (16.5 to 17.5 g/ft$^3$).

Concerning the total loading of the third washcoat layer according to the present invention, any possible loading may be chosen in principle. In general, the loading of the third washcoat layer in the nitrogen oxide storage catalyst of the inventive treatment system may range from 3 to 305 g/l (0.05 to 5 g/in$^3$), preferably from 6 to 122 g/l (0.1 to 2 g/in$^3$),

more preferably from 12 to 92 g/l (0.2 to 1.5 g/in$^3$), more preferably from 18 to 61 g/l (0.3 to 1 g/in$^3$), more preferably from 24 to 37 g/l (0.4 to 0.6 g/in$^3$), and even more preferably from 27 to 34 g/l (0.45 to 0.55 g/in$^3$). Furthermore, it is preferred that the loading of the third washcoat layer in the portion of the catalyst containing the third washcoat layer is less than the loading of the first washcoat layer onto which it is disposed.

According to the present invention wherein the nitrogen oxide storage catalyst of the inventive treatment system comprises a third washcoat layer, the third washcoat layer comprises 0.001 wt.-% or less of Rh.

In a preferred embodiment of the present invention, Pd comprised in the third washcoat layer is at least partially supported on metal oxide particles.

In principle, any metal oxide support particles may be used in the third washcoat layer, wherein metal oxide support particles are preferred which comprise at least one metal oxide selected from the group consisting of alumina, zirconia, zirconia-alumina, baria-alumina, lanthana-alumina, lanthana-zirconia-alumina, and mixtures thereof, more preferably, wherein the metal oxide particles comprise zirconia-alumina and/or lanthana-alumina, even more preferably zirconia-alumina.

As for the metal oxide particles of the first and second washcoat layers, the metal oxide support particles comprised in the third washcoat layer may be doped with one or more compounds. Thus, the metal oxide support particles, preferably alumina, comprised in the third washcoat layer are preferably doped with zirconia. In principle the metal oxide support particles of the third washcoat layer may be doped with any possible amount of zirconia, wherein the metal oxide support particles are preferably doped with 1 to 50 % zirconia, more preferably from 5 to 40 %, more preferably from 10 to 30 %, more preferably from 15 to 25 %, more preferably from 18 to 22 %, and even more preferably from zirconia 19 to 21 %.

The substrate of the nitrogen oxide storage catalyst of the inventive treatment system of the present invention is a honeycomb substrate comprising a plurality of longitudinally extending passages formed by longitudinally extending walls bounding and defining said passages, wherein said honeycomb substrate preferably comprises alternating inlet and outlet passages, said inlet passages having an open inlet end and a closed outlet end, and said outlet passages having a closed inlet end and an open outlet end, thus forming a wall-flow substrate. With respect to the preferred embodiments of the present invention which comprise such a wall-flow substrate, it will be understood that the loading of the washcoat layers thereon will depend on substrate properties such as porosity and wall thickness.

According to the present invention, the first washcoat layer onto 100 - x % of the surface of which the second washcoat layer is disposed is the first washcoat layer disposed on the walls of the inlet passages of the honeycomb substrate, wherein the second washcoat layer is disposed on the first portion of said first washcoat layer extending from the inlet end of the honeycomb substrate (front section). According to the present invention it is preferred that said second washcoat layer is provided on the substrate as a continuous layer.

Regarding preferred embodiments of the nitrogen oxide storage catalyst of the inventive treatment system, it is further preferred that the first washcoat layer onto which said third washcoat layer is disposed is the first washcoat layer disposed on the outlet passages of the honeycomb substrate, said third washcoat layer being disposed on at least a portion of said first washcoat layer of the outlet passages of the honeycomb substrate.

According to a particularly preferred embodiment comprising a wall-flow substrate, the third washcoat layer is disposed on 100 - x % of the surface of the first washcoat layer, x ranging from 20 to 80, preferably from 25 to 75, more preferably from 30 to 70, more preferably from 35 to 65, more preferably from 40 to 60, more preferably from 45 to 65, and even more preferably from 48 to 52. Furthermore, said third washcoat layer is preferably disposed on a portion of said first washcoat layer extending from the outlet end of the honeycomb substrate (rear section).

Accordingly, the present invention is directed to a treatment system for an automobile exhaust gas stream. In particular, the treatment system of the present invention comprises

> a combustion engine which operates periodically between lean and rich conditions;
> an exhaust gas conduit in communication with the engine; and
> a nitrogen oxide storage catalyst as described according to any of the particular and preferred embodiments of the inventive treatment system in the foregoing provided within the exhaust gas conduit.

In principle, any conceivable combustion engine may be used in the treatment system of the present invention, wherein preferably a gasoline engine is used, and more preferably a direct injection gasoline engine.

In a gasoline vehicle application, a catalytic device employing a three-way conversion ("TWC") catalyst may be used in conjunction with the nitrogen oxide storage catalyst. Such a device may be located within the exhaust gas conduit of the internal combustion engine and will be disposed upstream and/or downstream of the nitrogen oxide storage catalyst. The TWC catalyst typically includes platinum, palladium and rhodium catalytic components dispersed on a high surface area refractory support and may also contain one or more base metal oxide catalytic components such as oxides of iron, manganese or nickel. Such catalysts can be stabilized against thermal degradation by expedients such as impregnating an activated alumina support with one or more rare earth metal oxides such as ceria. Such stabilized catalysts can sustain very high operating temperatures. For example, if a fuel cut technique is utilized, temperatures as high as 1050 °C may be sustained in the catalytic device.

If the catalytic device is employed and is located upstream of the nitrogen oxide storage catalyst, the catalytic device may be mounted close to the exhaust manifold of the engine. In such an arrangement, the TWC catalyst may warm up quickly and provide for efficient cold start emission control. Once the engine is warmed up, the TWC catalyst will remove HC, CO and $NO_x$ from the exhaust gas stream during stoichiometric or rich operation and HC and CO during lean operation. In one embodiment, the nitrogen oxide storage catalyst is positioned downstream of the catalytic device where the exhaust gas temperature enables maximum $NO_x$ trap efficiency. During periods of lean engine operation, when $NO_x$ passes through the TWC catalyst, $NO_x$ is stored on the nitrogen oxide storage catalyst. The nitrogen oxide is then periodically desorbed and the $NO_x$ is reduced to nitrogen under periods of stoichiometric or rich engine operation. If desired, a catalytic device containing a TWC catalyst may be employed downstream of the nitrogen oxide storage catalyst. Such a catalytic device may serve to remove further amounts of HC and CO from the exhaust gas stream and, in particular, will provide for efficient reduction of the $NO_x$ to nitrogen under periods of stoichiometric or rich engine operation.

In a diesel vehicle application, the nitrogen oxide storage catalyst may be used in conjunction with a diesel oxidation catalyst (DOC), and a catalyzed soot filter (CSF), where the DOC and CSF are placed either before or after the nitrogen oxide storage catalyst.

Furthermore, embodiments of the treatment system are preferred which, in addition to or alternatively to the three way catalyst, comprise a selective reduction catalyst provided upstream or downstream from the nitrogen oxide storage catalyst, wherein embodiments are preferred with the selective reduction catalyst provided downstream from the nitrogen oxide storage catalyst. According to a particularly preferred embodiment, the treatment system of the present invention comprises both a three way catalyst and a selective reduction catalyst located downstream from the nitrogen oxide storage catalyst, wherein preferably, both the three way catalyst and the selective reduction catalysts are located on the same substrate.

In addition to these embodiments, the present description also describes a method for the treatment of automobile engine exhaust gas using the nitrogen oxide storage catalyst. More specifically, the method includes conducting an automobile engine exhaust gas over and/or through the nitrogen oxide storage catalyst, wherein the automobile engine exhaust gas is preferably conducted through the nitrogen oxide storage catalyst.

Thus, the present description also describes a method for the treatment of automobile engine exhaust gas comprising:

(i) providing a nitrogen oxide storage catalyst, and
(ii) conducting an automobile engine exhaust gas stream over and/or through the nitrogen oxide storage catalyst.

In the method described herein, it is preferred that the automobile engine exhaust gas is from a gasoline engine, more preferably from a direct injection gasoline engine.

In use, the exhaust gas stream which is contacted with the nitrogen oxide storage catalyst is alternately adjusted between lean and stoichiometric/rich operating conditions so as to provide alternating lean operating periods and stoichiometric/rich operating periods. It will be understood that the exhaust gas stream being treated may be selectively rendered lean or stoichiometric/rich either by adjusting the air-to-fuel ratio fed to the engine generating the exhaust or by periodically injecting a reductant into the gas stream upstream of the catalytic trap. For example, the composition of the of the nitrogen oxide storage catalyst of the inventive treatment system of the present invention is well suited to treat the exhaust of engines, including diesel engines, which continuously run lean. In such case, in order to establish a stoichiometric/rich operating period, a suitable reductant, such as fuel, may be periodically sprayed into the exhaust immediately upstream of the nitrogen oxide storage catalyst to provide at least local (at the nitrogen oxide storage catalyst) stoichiometric/rich conditions at selected intervals. Partial lean-burn engines, such as partial lean-burn gasoline engines, are designed with controls which cause them to operate lean with brief, intermittent rich or stoichiometric conditions.

Thus, according to the method described herein, it is preferred that the automobile engine is operated periodically between lean and rich conditions.

In addition to the nitrogen oxide storage catalyst described in the foregoing, the present description also describes a method for its production. In particular, the present description further describes a method of producing a nitrogen oxide storage catalyst comprising the steps of:

(i) providing a substrate which is preferably a honeycomb substrate;
(ii) providing a first washcoat layer on said substrate, said first washcoat layer comprising metal oxide support particles and at least one metal compound selected from the group consisting of alkaline earth metal compounds, alkali metal compounds, rare earth metal compounds, and mixtures thereof, at least a portion of said at least one metal compound being supported on the metal oxide support particles;

(iii) drying and/or calcining the coated substrate;

(iv) providing a second washcoat layer comprising Rh on 100 - x % of the surface of the first washcoat layer, wherein x ranges from 20 to 80, preferably from 25 to 75, more preferably from 30 to 70, more preferably from 35 to 65, more preferably from 40 to 60, more preferably from 45 to 65, and even more preferably from 48 to 52;

(v) drying and/or calcining the coated substrate;

(vi) providing a third washcoat layer onto at least a portion of the surface of the first washcoat layer, onto which the second washcoat layer has not been provided;

(vii) drying and/or calcining the coated substrate;

wherein alternatively, steps (vi) and (vii) are conducted after step (iii) and prior to step (iv), and wherein the first washcoat layer contains 0.001 wt.-% or less of Rh.

According to the production method described, the washcoat layers may be provided on the substrate by any means commonly used in the art, wherein preferably the washcoat is applied to the substrate by a dip coating procedure. In general, the preferred dip coating procedure may be conducted once to apply the washcoat layer in question, and may be repeated as many times as necessary for achieving the desired loading of said washcoat layer.

Concerning the drying procedure used in the production method, the temperature and duration of said procedure are generally chosen such that the resulting dried product is essentially devoid of any solvent employed in the coating procedure.

With respect to the calcining procedure used in the production method, the temperature and duration are generally chosen such that a product is obtained which displays the chemical and physical transformations typical to the calcination process. Preferably, the temperature at which the calcination procedure is conducted is comprised in the range of from 450 to 600 °C, more preferably of from 500 to 580 °C, and even more preferably of from 540 to 560 °C. The calcination procedure may be conducted under any suitable atmosphere, wherein the calcination is generally conducted under air.

According to the production method, it is preferred that the metal oxide support particles comprise at least one metal oxide selected from the group consisting of alumina, zirconia, zirconia-alumina, baria-alumina, lanthana-alumina, lanthana-zirconia-alumina, and mixtures thereof, wherein more preferably the metal oxide support particles comprise zirconia-alumina and/or lanthana-alumina, even more preferably zirconia-alumina.

According to a preferred embodiment, step (ii) of the production method comprises the steps of:

(a) mixing a solution of at least one metal compound with particles of at least one metal compound;

(b) drying and/or calcining the mixture to obtain a composite material;

(c) impregnating metal oxide support particles with a solution comprising Pt;

(d) impregnating metal oxide support particles with a solution comprising Pd;

(e) providing and milling a slurry of the particles obtained in steps (c) and (d);

(f) providing a slurry comprising the milled particles obtained in step (e) and the composite material obtained in step (b) and milling the resulting mixture;

(g) coating the substrate with the slurry obtained in step (f).

According to the present production method, the slurry in step (f) contains substantially no Rh.

According to the production process, it is further preferred that in step (a) the at least one metal compound in solution and the at least one metal compound present as particles do not contain the same metals, wherein more preferably the at least one metal compound in solution comprises Ba, and the at least one metal compound in particle form comprises Ce, more preferably, wherein said particles comprise ceria.

Regarding the calcining procedure used in step (b), the temperature employed therein is preferably comprised in the range of from 500 to 800 °C, more preferably of from 600 to 750 °C, and even more preferably of from 680 to 720 °C.

With respect to the impregnation of metal oxide support particles with platinum group metal containing solutions in steps (c) and/or (d) of the preferred method, said procedure may be conducted in any known manner, provided that the platinum group metal respectively comprised therein may be effectively supported onto the metal oxide support particles. Preferably, this is achieved by an incipient wetness procedure.

According to a further embodiment of the present production method, a solution comprising the platinum group metals according to steps (c) and (d) may be directly added together with the metal oxide particles and the composite material obtained in step (b) to form a slurry which is then milled according to step (e). Thus, according to an alternative embodiment which is preferred, step (ii) comprises the steps of:

(a) mixing a solution of at least one metal compound with particles of at least one metal compound;

(b) drying and/or calcining the mixture to obtain a composite material;

(f') providing a slurry comprising a solution comprising Pt and Pd, metal oxide support particles, and the composite material obtained in step (b) and milling the resulting mixture;

(g) coating the substrate with the slurry obtained in step (f').

Regarding the milling procedure used in preferred embodiments of the production process, said milling may be conducted in any known milling apparatus suited for the milling of particles as used herein, wherein a milling apparatus is preferably employed which may grind the particles down to an average particle size ($d_{90}$) ranging from 5 to 20 $\mu$m, preferably from 8 to 14 $\mu$m, more preferably from 9 to 13 $\mu$m, and even more preferably from 10 to 12 $\mu$m.

According to preferred embodiments of the production method, a slurry is provided for the milling and the application of the components comprised in the respective washcoat layers onto the substrate. In general, the slurry employed in the preferred embodiments of the method may be provided according to any method known in the art using any suitable solvent, wherein aqueous solvents and in particular water, preferably as distilled water, are preferably used.

According to the production method, it is further preferred that step (iv) comprises the steps of:

(aa) impregnating metal oxide support particles with a solution comprising Rh;

(bb) providing and milling a slurry of the impregnated particles;

(cc) coating the substrate with the slurry obtained in step (bb).

Concerning steps (aa), (bb), and (cc) of said preferred embodiment, it is further preferred that these respectively be conducted in the same fashion as steps (c) or (d), i.e. with respect to step (aa), (e), i.e. with respect to step (bb), and (g), i.e. with respect to step (cc).

Furthermore, according to a particularly preferred embodiment, step (vi) comprises the steps of:

(dd) impregnating metal oxide support particles with a solution comprising Pd;

(ee) providing and milling a slurry of the impregnated particles;

(ff) coating the substrate with the slurry obtained in step (ee).

As for steps (aa), (bb) and (cc), it is further preferred that steps (dd), (ee), and (ff) respectively be conducted in the same fashion as steps (c) or (d), with respect to step (dd), (e), with respect to step (ee), and (g) with respect to step (ff).

According to the preferred embodiments of the production method, it is further preferred that in steps (aa) and/or (dd) the metal oxide support particles are impregnated by an incipient wetness procedure. Furthermore, it is prefered that in steps (g), (cc) and/or (ff) the coating is achieved by dip coating.

According to embodiments of the production method which are further preferred, the substrate is a honeycomb substrate, and the method comprises a further step of:

(viii) alternatively closing the inlet our outlet ends of the honeycomb substrate to form inlet passages having an open inlet end and a closed outlet end, and outlet passages having a closed inlet end and an open outlet end.

According to the production method, it is particularly preferred that in steps (e), (f), (f), (bb) and/or (ee) the slurry is milled to a particle size ($d_{90}$) ranging from 5 to 20 $\mu$m, preferably from 8 to 14 $\mu$m, more preferably from 9 to 13 $\mu$m, and even more preferably from 10 to 12 $\mu$m.

Even when not explicitly mentioned, the method for the production of a nitrogen oxide storage catalyst is to be understood as comprising all of the features obviously necessary for obtaining the nitrogen oxide storage catalyst, in particular with respect to the type and amount as well as with respect to the chemical and physical properties of the individual components comprised therein.

In addition to this, the present description describes the products of the production method per se, in particular with respect to the chemical and physical properties of a nitrogen oxide storage catalyst which is obtainable according to said method.

BRIEF DESCRIPTION OF THE DRAWINGS

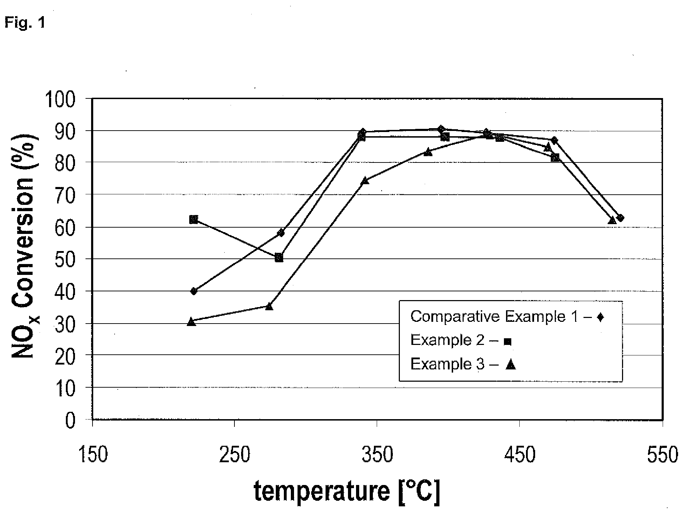

Fig. 1    is a graph comparing the percent $NO_x$ conversion as a function of the temperature in °C for selected examples of the description, wherein the NOx tailpipe trigger was set to 100 ppm. In Fig. 1, "♦" represents the values obtained for Comparative Example 1, "■" stands for the values obtained for Example 2, and "▲" stands for the values obtained for Example 3.

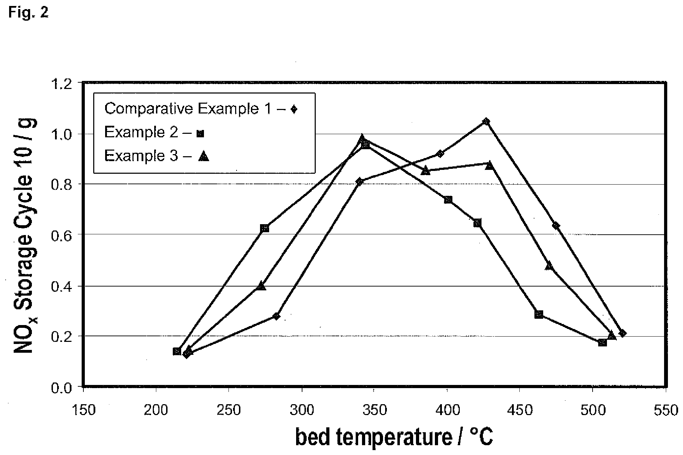

Fig. 2    is a graph comparing the $NO_x$ storage in cycle 10 after 9 lean/rich cycles with a lean NOx trigger set to 100 ppm as a function of the temperature in °C for selected examples of the description, wherein the NOx tailpipe trigger was set to 100 ppm. In Fig. 2, "♦" stands for the values obtained for Comparative Example 1, "■" stands for the values obtained for Example 2, "▲" stands for the values obtained for Example 3, and "NOx Storage Cycle 10 / g" stands for the NOx Storage Efficiency in g/L.

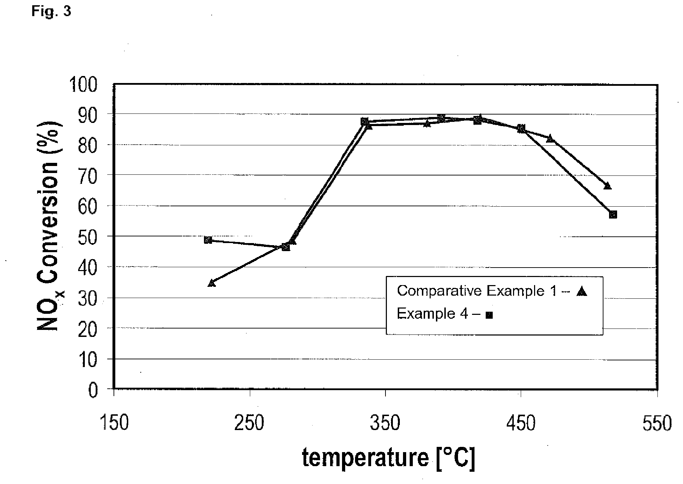

Fig. 3     is a graph comparing the percent $NO_x$ conversion as a function of the temperature in °C for selected examples of the description, wherein the NOx tailpipe trigger was set to 100 ppm. In Fig. 3, "▲" stands for the values obtained for Comparative Example 1, and "■" stands for the values obtained for Example 4.

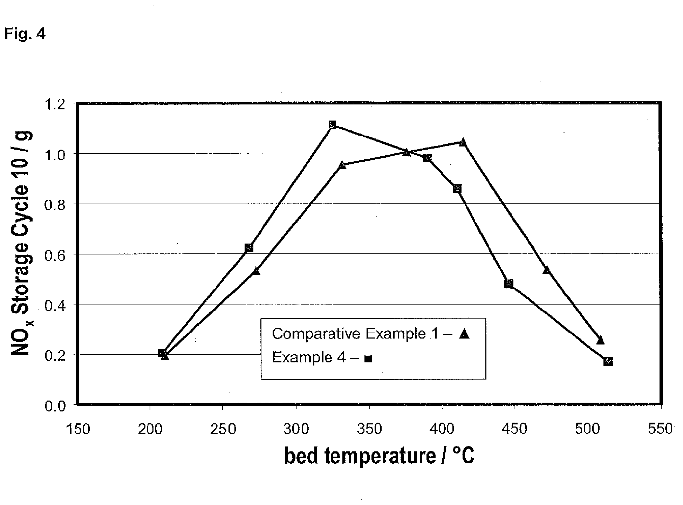

Fig. 4     is a graph comparing the $NO_x$ storage in cycle 10 after 9 lean/rich cycles with a lean NOx trigger set to 100 ppm as a function of the temperature in °C for selected examples of the description, wherein the NOx tailpipe trigger was set to 100 ppm. In Fig. 4, "▲" stands for the values obtained for Comparative Example 1, "■" stands for the values obtained for Example 4, and "NOx Storage Cycle 10 / g" stands for the NOx Storage Efficiency in g/L.

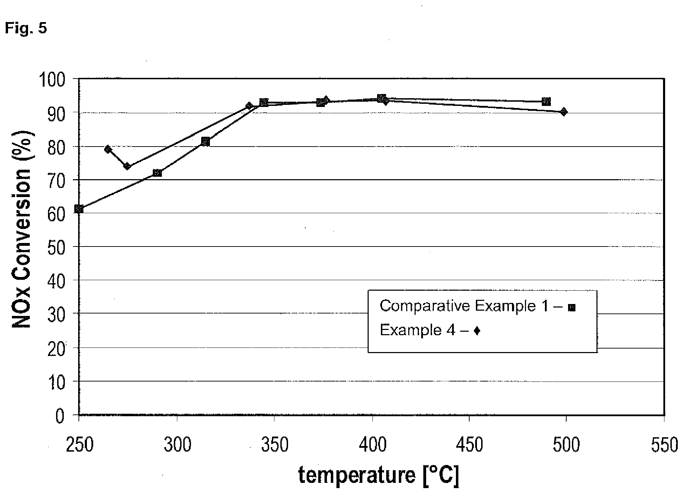

Fig. 5     is a graph comparing the percent $NO_x$ conversion as a function of the temperature in °C for selected examples of the description, wherein the NOx tailpipe trigger was set to 40 ppm. In Fig. 5, "■" stands for the values obtained for Comparative Example 1, and "♦" stands for the values obtained for Example 4.

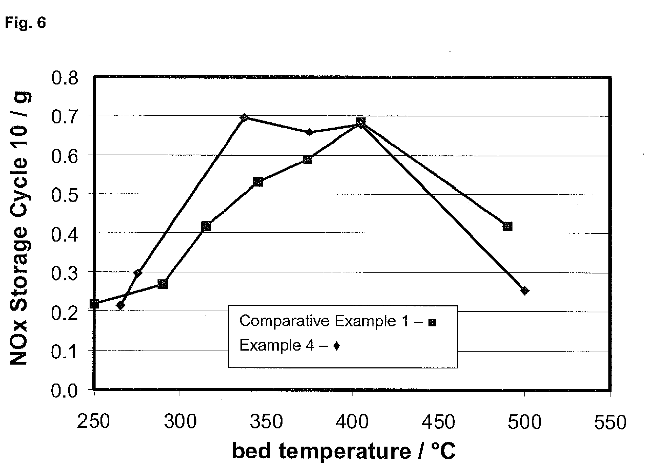

Fig. 6     is a graph comparing the $NO_x$ storage in cycle 10 after 9 lean/rich cycles with a lean NOx trigger set to 40 ppm as a function of the temperature in °C for selected examples of the description, wherein the NOx tailpipe trigger was set to 40 ppm. In Fig. 6, "■" stands for the values obtained for Comparative Example 1, "♦" stands for the values obtained for Example 4, and "NOx Storage Cycle 10 / g" stands for the NOx Storage in cycle 10 in g/L.

## COMPARATIVE EXAMPLE 1

### Preparation of the NOx-Trap Layer

$BaCO_3$ and $CeO_2$ were intimately mixed and finely dispersed in a weight ratio of 1:4. To this purpose, cerium oxide having a BET surface area of from 150 m$^2$/g was mixed with a solution of barium acetate such that the $BaCO_3/CeO_2$ composite had a $BaCO_3$ content of from 25 wt.-%. After mixing, the suspension of soluble barium acetate and $CeO_2$ was then dried at a temperature of from 120 °C to obtain a solid mixture of barium acetate and ceria.
After drying, the mixture was then heated at 700°C for 2 hours to form particles of ceria having barium carbonate supported on the ceria particles. The resulting $BaCO_3$ had an average crystallite size of from about 25 nm and the ceria had an average crystallite size of 10 nm. The $BaCO_3/CeO_2$ composite formed particles with an average size of from about 10 microns. The BET surface area of the particulate mixture is 50 m$^2$/g.

### Preparation of Catalytic Component

To provide a fully formulated $NO_x$ storage catalyst or catalytic trap as described above, in addition to the manufacture of barium carbonate supported on ceria, a precious metal is supported on a refractory oxide according to the following procedure.
Pt and Rh are impregnated onto $Al_2O_3$ by an incipient wetness procedure to yield 1.8 wt.-% Pt and 0.3 wt.-% Rh. Pd is impregnated separately onto alumina to a Pd loading of 1.4 wt.-%. In both cases, the alumina had a BET surface area of 200 m$^2$/g and contained 10 wt.-% zirconia.
A mixture of 101 g/l (1.65 g/in$^3$) of the Pt/Rh alumina and 24 g/l (0.4 g/in$^3$) Pd on alumina was prepared. A solution of zirconium acetate with a content of 12 g/l (0.2 g/in$^3$) was added, giving a slurry with a solid content of 45%. This slurry was milled with a ball mill until a particle size of 12 micron ($d_{90}$) was obtained. Magnesium acetate was added to the slurry and stirred to dissolve, yielding 37 g/l (0.6 g/in$^3$) magnesium oxide. To this mixture, 207 g/l (3.4 g/in$^3$) of the Ba-$CO_3/CeO_2$ composite particles is added and the slurry is milled at pH 6.5-7 until a particle size of 11 micron ($d_{90}$) is obtained.

### Coating of a Substrate

A ceramic honeycomb substrate was coated with the slurry in a dip coating manner and then dried in a dryer and subsequently calcined in a furnace under air at 550 °C. The coating procedure was then repeated until a loading of 384 g/l (6.3 g/in$^3$) is achieved.
The final nitrogen oxide storage catalyst displays a platinum loading of 2.54 g/l (72 g/ft$^3$), a rhodium loading of 0.13 g/l (3.6 g/ft$^3$), and a palladium loading of 0.51 g/l (14.4 g/ft$^3$).

**EXAMPLE 2 (not according to the invention)**

Samples according to the present example were prepared with the addition of a second layer, as described below.

Pt is impregnated onto $Al_2O_3$ by an incipient wetness procedure to yield 1.8 wt.-% Pt. Pd is impregnated separately onto alumina to a Pd loading of 0.2 wt.-%. In both cases, the alumina had a BET surface area of 200 $m^2$/g and contained 10 wt.-% zirconia.

A mixture of 92 g/l (1.5 g/in$^3$) of the Pt alumina and 24 g/l (0.4 g/in$^3$) Pd on alumina was prepared. A solution of zirconium acetate with a content of 9 g/l (0.15 g/in$^3$) was added, giving a slurry with a solid content of 42%. This slurry was milled with a ball mill until a particle size of 12 micron ($d_{90}$) was obtained. Magnesium acetate was added to the slurry and stirred to dissolve, yielding 24 g/l (0.4 g/in$^3$) magnesium oxide. To this mixture, 201 g/l (3.3 g/in$^3$) of $BaCO_3/CeO_2$ composite particles obtained according to the procedure of Comparative Example 1 was added and the slurry was milled at pH 5-6 until a particle size of 11 micron ($d_{90}$) is obtained.

**Coating of a Substrate**

A ceramic honeycomb substrate was coated with the slurry in a dip coating manner and then dried in a dryer and subsequently calcined in a furnace under air at 550 °C. The coating procedure is then repeated until a loading of from 354 g/l (5.8 g/in$^3$) is achieved.

**Preparation of a Second Layer**

A precious metal is impregnated onto alumina with a BET surface area of 180 $m^2$/g. The alumina is doped with 20 wt.-% zirconia. Rhodium nitrate is impregnated onto the alumina to yield 0.5 wt.-% Rh. After impregnation, the alumina slurry is diluted to 35% solids with water. The pH is adjusted to 3.5 to 4 using tartaric acid. The slurry is then milled to about 12 micron ($d_{90}$) with a continuous mill. Subsequently, the pH is adjusted to 6.5 using MEA.

To create the second, or subsequent layer, the coated substrate is coated again with the slurry in a dip coating manner and then dried in a dryer. The substrate is then calcined in a furnace under air at 550 °C. The coating procedure yields the additional coat with a loading of 31 g/l (0.5 g/in$^3$). The overall coating weight of the first and second washcoat layers in the final nitrogen oxide storage catalyst containing said layers is 384 g/l (6.3 g/in$^3$). The final nitrogen oxide storage catalyst displays a platinum loading of 2.47 g/l (70 g/ft$^3$), a rhodium loading of 0.14 g/l (4 g/ft$^3$), and a palladium loading of 0.35 g/l (10 g/ft$^3$).

**EXAMPLE 3 (not according to the invention)**

Samples according to the present example were prepared with the addition of a second layer (the "third washcoat layer" according to the invention), as described below.

Pt is impregnated onto $Al_2O_3$ by an incipient wetness procedure to yield 1.8 wt.-% Pt. Pd is impregnated separately onto alumina to a Pd loading of 0.2 wt.-%. In both cases, the alumina had a BET surface area of 200 $m^2$/g and contained 10 wt.-% zirconia.

A mixture of 92 g/l (1.5 g/in$^3$) of the Pt alumina and 24 g/l (0.4 g/in$^3$) Pd on alumina was prepared. A solution of zirconium acetate with a content of 9 g/l (0.15 g/in$^3$) was added, giving a slurry with a solid content of 42%. This slurry was milled with a ball mill until a particle size of 12 micron ($d_{90}$) was obtained. Magnesium acetate was added to the slurry and stirred to dissolve, yielding 24 g/l (0.4 g/in$^3$) magnesium oxide. To this mixture, 201 g/l (3.3 g/in$^3$) of $BaCO_3/CeO_2$ composite particles obtained according to the procedure of Comparative Example 1 was added and the slurry was milled at pH 5-6 until a particle size of 11 micron ($d_{90}$) is obtained.

**Coating of a Substrate**

A ceramic honeycomb substrate was coated with the slurry in a dip coating manner and then dried in a dryer and subsequently calcined in a furnace under air at 550 °C. The coating procedure is then repeated until a loading of from 354 g/l (5.8 g/in$^3$) is achieved.

**Preparation of a Second Layer (the "third washcoat layer" according to the invention)**

A precious metal is impregnated onto alumina with a BET surface area of 180 $m^2$/g. The alumina is doped with 20 wt.-% of zirconia. Palladium nitrate is impregnated onto the alumina to yield 0.5 wt.-% Pd. After impregnation, the alumina slurry is diluted to 35% solids with water. The pH is adjusted to 3.5 to 4 using tartaric acid. The slurry is then milled to about 12 micron ($d_{90}$) with a continuous mill. Subsequently, the pH is adjusted to 6.5 using MEA.

To create the second, or subsequent layer, the coated substrate is coated again with the slurry in a dip coating manner and then dried in a dryer. The substrate is then calcined in a furnace under air at 550 °C. The coating procedure yields the additional coat with a loading of 31 g/l (0.5 g/in$^3$). The overall coating weight of the first and second layer in the final nitrogen oxide storage catalyst is 384 g/l (6.3 g/in$^3$). The final nitrogen oxide storage catalyst displays a platinum loading of 2.47 g/l (70 g/ft$^3$) and a palladium loading of 0.60 g/l (17 g/ft$^3$).

**REFERENCE EXAMPLE 4**

Examples 2 and 3 were respectively repeated, wherein the second layer coating according to Example 2 was only provided on 50% of the first layer coating, such that 50% of the front section of the honeycomb substrate relative to the longitudinally extending passages was coated therewith, and the second layer coating (the "third washcoat layer" according to the invention) according to Example 3 was provided on the remaining 50% of the first layer coating which had not been coated with a second layer coating according to Example 2, such that 50% of the rear section of the honeycomb substrate was coated therewith.

The final nitrogen oxide storage catalyst displays a rhodium loading of 0.14 g/l (4 g/ft$^3$) in the front section of the catalyst containing the second layer coating according to Example 2, of 0 g/l (0 g/ft$^3$) in the section of the catalyst containing the second washcoat layer (the "third washcoat layer" according to the invention) according to Example 3, and a total loading of rhodium in the catalyst of 0.07 g/l (2g/ft$^3$). The palladium loading is of 0.35 g/l (10 g/ft$^3$) in the front section of the catalyst containing the second layer coating according to Example 2, of 0.60 g/l (17 g/ft$^3$) in the section of the catalyst containing the second washcoat layer (the "third washcoat layer" according to the invention) according to Example 3, and a total loading of palladium in the catalyst of 0.48 g/l (13.5 g/ft$^3$).

**EXAMPLE 5 (not according to the invention)**

Example 2 and Comparative Example 1 (modification: no impregnation with Rh) were respectively repeated, wherein the layer coatings according to Example 2 were only provided on 50% of the honeycomb substrate, such that 50% of the front section of the honeycomb substrate relative to the longitudinally extending passages was coated according to Example 2, and the single layer coating according to the modified Comparative Example 1 was provided on the 50% of the honeycomb substrate which had not been coated with the layer coatings according to Example 2, such that 50% of the rear section of the honeycomb substrate was coated therewith.

**NOx Storage Capacity Testing**

Catalytic traps were evaluated after aging for 25 hours at 800°C, as follows. An engine was set to an air/fuel ratio of 11.6 for 2 minutes at the desired temperature to remove all stored $NO_x$ and oxygen from the catalyst. This mode represents rich engine operation. Subsequently, the engine was adjusted to an air/fuel ratio of 29.6 under constant $NO_x$ mass flow. This mode represents lean engine operation. During the whole test, the $NO_x$ concentration was measured before and after the $NO_x$ trap using a $NO_x$ analyzer.

$$U = \frac{NO_x^{massoutlet}}{NO_x^{mas\,sin\,let}} \bullet 100 \tag{1}$$

After the 2 minute rich operation followed by a lean operation which was terminated if a concentration of 100 ppm NOx or 40 ppm NOx was measured at the tailpipe (i.e. after the NOx trap), respectively. In that case the engine was operated under rich conditions to remove stored $NO_x$. Hydrocarbon and carbon monoxide tailpipe emissions were avoided by the HEGO sensor at the tailpipe: If the HEGO voltage increased over 450mV, the engine is switched to lean engine operation again. This lean/rich cycle was repeated 10 times to establish constant catalyst conditions. For the time period of the 10 lean/rich cycles the $NO_x$ efficiency (U) is calculated from the $NO_x$ inlet and $NO_x$ outlet concentrations via equation (1): $NO_x$ storage mass in g is calculated via equation (2):

$$NO_x^{mass}(g) = \int NO_x * \dot{V}/V_{ideal} * M_S * 1/(3.6 * 10^6) dt \tag{2}$$

$NO_x$ = $NO_x$ concentration (ppm)

$V$ = volume flow ($m^3/h$)

$V_{ideal}$ = ideal molar volume (l/mol) at STP

Ms = Molar weight of $NO_2$ (g/mol)

dt = time interval (s)

After the 10 lean/rich cycles, the engine is operated for 1 min rich to remove the stored $NO_x$ completely. Subsequently, the engine is operated under lean condition until no more $NO_x$ is stored in the trap. Under these conditions, the overall $NO_x$ storage capacity is evaluated. However, to achieve a $NO_x$ conversion of greater than 80%, the $NO_x$ storage capacity at high $NO_x$ efficiency is decisive.

As may be taken from the results, the nitrogen oxide catalyst of the present invention displays an improved $NO_x$ storage and conversion efficiency compared to nitrogen oxide storage catalysts of the prior art exemplified by Comparative Example 1. In particular, as may be taken from Figures 1 and 2, the application of first and second washcoat layers, as well as the application of first and third washcoat layers respectively leads to an improvement in both the $NO_x$ storage and conversion efficiencies of a nitrogen oxide storage catalyst, in particular at lower temperatures reflecting the "cold start" conditions typically encountered at the beginning of the automotive exhaust gas treatment process.

Thus, as may be taken from Figure 1, a nitrogen oxide storage catalyst comprising a second washcoat layer comprising Rh (Example 2) or a third washcoat layer comprising Pd (Example 3) in addition to a first washcoat layer comprising a nitrogen oxide storage material, respectively leads to a clear improvement in the $NO_x$ conversion efficiency compared to an $NO_x$ storage catalyst according to Comparative Example 1 displaying a single washcoat layer. This improvement is particularly apparent at lower temperatures of the testing process, which reproduces the typical "cold start" environment in automotive exhaust gas treatment. This applies in particular with respect to Example 2, which comprises a topcoat containing Rh.

Furthermore, as may be taken from Figure 2, same respectively applies for the $NO_x$ storage capacities of the $NO_x$ storage catalysts according to Examples 2 and 3 compared to the performance of the $NO_x$ storage catalyst of Comparative Example 1.

Most interestingly, however, as may be taken from Figures 3 to 6, the nitrogen oxide storage catalyst of Example 4, which combines the $NO_x$ storage catalyst design of Examples 2 and 3, and thus achieves a particularly reduced total loading of Rh, surprisingly displays a higher efficiency in both $NO_x$ conversion and $NO_x$ storage compared to the $NO_x$ storage catalyst of Comparative Example 1 which contains almost twice the total loading in Rh. Most importantly, said improved efficiency is particularly pronounced at lower testing temperatures reflecting the "cold start" environment in automotive exhaust gas treatment.

Accordingly, as shown from the testing of Example 4, a nitrogen oxide storage catalyst according to the present invention provides an improved catalyst performance in automotive exhaust gas treatment with respect to the abatement of nitrogen oxide, in particular with respect to the critical "cold start" start conditions, in combination with a considerable reduction of the platinum group metals necessary for its performance, in particular with respect to the amount of Rh contained therein.

**Claims**

1. A treatment system for an automobile exhaust gas stream, comprising:

     a combustion engine which operates periodically between lean and rich conditions;
     an exhaust gas conduit in communication with the engine; and
     a nitrogen oxide storage catalyst provided within the exhaust gas conduit, saidA nitrogen oxide storage catalyst comprising:

          a substrate;
          a first washcoat layer disposed on the substrate, the first washcoat layer comprising metal oxide support particles and a nitrogen oxide storage material comprising at least one metal compound selected from the group consisting of alkaline earth metal compounds, alkali metal compounds, rare earth metal compounds, and mixtures thereof, at least a portion of said at least one metal compound being supported on the metal oxide support particles; and
          a second washcoat layer disposed over the first washcoat layer, said second washcoat layer comprising Rh, wherein the first washcoat layer contains 0.001 wt.-% or less of Rh, and
          wherein the second washcoat layer is disposed on 100 - x % of the surface of the first washcoat layer, x ranging from 20 to 80,
          and

wherein the nitrogen oxide storage catalyst further comprises a third washcoat layer which comprises Pd and which is disposed onto at least a portion of the first washcoat layer, onto which the second washcoat layer is not disposed,

wherein the third washcoat layer contains 0.001 wt.-% or less of Rh, and

wherein the substrate comprises a honeycomb substrate comprising a plurality of longitudinally extending passages formed by longitudinally extending walls bounding and defining said passages, wherein the first washcoat layer onto 100 - x % of the surface of which the second washcoat layer is disposed is the first washcoat layer of the inlet passages of the honeycomb substrate, wherein the second washcoat layer is disposed on the first portion of said first washcoat layer extending from the inlet end of the honeycomb substrate (front section).

2. The treatment system according to claim 1, wherein the second washcoat layer is disposed on 100 - x % of the surface of the first washcoat layer, x ranging from 25 to 75, preferably from 30 to 70, more preferably from 35 to 65, more preferably from 40 to 60, more preferably from 45 to 55, and even more preferably from 48 to 52.

3. The treatment system according to claim 1 or 2, wherein the second washcoat layer is a continuous layer.

4. The treatment system according to any one of claims 1 to 3, wherein the second washcoat layer further comprises metal oxide support particles on which Rh is at least partially supported.

5. The treatment system according to any one of claims 1 to 4, wherein the metal oxide support particles comprise at least one metal oxide selected from the group consisting of alumina, zirconia, zirconia-alumina, baria-alumina, lanthana-alumina, lanthana-zirconia-alumina, and mixtures thereof, preferably wherein the metal oxide particles comprise zirconia-alumina and/or lanthana-alumina, more preferably zirconia-alumina.

6. The treatment system according to any one of claims 1 to 5, wherein the nitrogen oxide storage material comprises at least one element selected from the group consisting of Li, Na, K, Rb, Cs, Mg, Ca, Sr, Ba, Ce, La, Pr, Nd, and mixtures thereof, preferably at least one element selected from the group consisting of Mg, Ba, Ce, and mixtures thereof, more preferably Ba and/or Ce.

7. The treatment system according to any one of claims 1 to 6, wherein the nitrogen oxide storage material comprises a cerium compound and a barium compound, preferably ceria and barium carbonate, preferably in a ceria : barium carbonate weight ratio of from 1 : 1 to 1 : 20, more preferably of from 1 : 2 to 1 : 15, more preferably of from 1:3 to 1:10, and even more preferably of from 1 : 3.5 to 1 : 5.

8. The treatment system according to claim 7, wherein barium carbonate is at least partially supported on particles comprising ceria, wherein the resulting particles preferably have a particle size ($d_{90}$) which ranges from 5 to 20 $\mu$m, preferably from 8 to 14 $\mu$m, more preferably from 9 to 13 $\mu$m, and even more preferably from 10 to 12 $\mu$m.

9. The treatment system according to any one of claims 1 to 8, wherein the first washcoat layer further comprises at least one platinum group metal selected from the group consisting of platinum, palladium, iridium, and mixtures thereof, wherein the at least one platinum group metal is preferably at least partially supported on the metal oxide support particles, more preferably wherein different types of platinum group metals are supported on separate metal oxide support particles.

10. The treatment system according to claim 9, wherein the first washcoat layer comprises Pd and/or Pt, preferably Pd and Pt.

11. The treatment system according to any of claims 1 to 10, wherein Pd comprised in the third washcoat layer is at least partially supported on metal oxide support particles, wherein the metal oxide support particles preferably comprise at least one metal oxide selected from the group consisting of alumina, zirconia, zirconia-alumina, baria-alumina, lanthana-alumina, lanthana-zirconia-alumina, and mixtures thereof, more preferably, wherein the metal oxide support particles comprise zirconia-alumina and/or lanthana-alumina, and even more preferably zirconia-alumina.

12. The treatment system according to any of claims 1 to 11, wherein the honeycomb substrate comprises alternating inlet and outlet passages, said inlet passages having an open inlet end and a closed outlet end, and said outlet passages having a closed inlet end and an open outlet end.

13. The treatment system according to any of claims 1 to 12, wherein the second washcoat layer is a continuous layer.

14. The treatment system according to claim 12 or 13, wherein the first washcoat layer onto the surface of which the third washcoat layer is disposed is the first washcoat layer of the of the outlet passages of the honeycomb substrate, said third washcoat layer being disposed on at least a portion of said first washcoat layer of the outlet passages of the honeycomb substrate.

**Patentansprüche**

1.  Behandlungssystem für einen Automobilabgasstrom, umfassend:

    einen Verbrennungsmotor, der periodisch zwischen mageren und reichen Bedingungen arbeitet;
    eine Abgasleitung in Verbindung mit dem Motor; und
    einen Stickstoffoxid-Speicherkatalysator, der in der Abgasleitung bereitgestellt ist, wobei der Stickstoffoxid-Speicherkatalysator umfasst:

    ein Substrat;
    eine erste Washcoatschicht, die auf dem Substrat angeordnet ist, wobei die erste Washcoatschicht Metalloxid-Trägerpartikel und ein Stickstoffoxid-Speichermaterial umfasst, das wenigstens eine Metallverbindung ausgewählt aus der Gruppe bestehend aus Erdalkalimetallverbindungen, Alkalimetallverbindungen, Seltenerdmetallverbindungen und Gemischen davon umfasst, wobei wenigstens ein Teil der wenigstens einen Metallverbindung auf den Metalloxid-Trägerpartikeln getragen ist, und
    eine zweite Washcoatschicht, die über der ersten Washcoatschicht angeordnet ist, wobei die zweite Washcoatschicht Rh umfasst,
    wobei die erste Washcoatschichtschicht 0,001 Gew.-% oder weniger Rh enthält, und
    wobei die zweite Washcoatschicht auf 100-x % der Oberfläche der ersten Washcoatschicht angeordnet ist, wobei x im Bereich von 20 bis 80 liegt,
    und
    wobei der Stickstoffoxid-Speicherkatalysator ferner eine dritte Washcoatschicht umfasst, die Pd umfasst und die auf wenigstens einem Teil der ersten Washcoatschicht angeordnet ist, auf dem die zweite Washcoatschicht nicht angeordnet ist,
    wobei die dritte Washcoatschichtschicht 0,001 Gew.-% oder weniger Rh enthält, und
    wobei das Substrat ein Bienenwabensubstrat umfasst, das eine Vielzahl von in Längsrichtung verlaufenen Durchlässen umfasst, die von in Längsrichtung verlaufenden Wänden gebildet werden, die die Durchlässe begrenzen und definieren, wobei die erste Washcoatschicht, bei der auf 100-x % der Oberfläche die zweite Washcoatschicht angeordnet ist, die erste Washcoatschicht der Einlassdurchgänge des Bienenwabensubstrats ist, wobei die zweite Washcoatschicht auf dem ersten Teil der ersten Washcoatschicht angeordnet ist, der sich dem Einlassende des Bienenwabensubstrats (vorderer Abschnitt) erstreckt.

2.  Behandlungssystem gemäß Anspruch 1, wobei die zweite Washcoatschicht auf 100-x % der Oberfläche der ersten Washcoatschicht angeordnet ist, x in dem Bereich von 25 bis 75 liegt, vorzugsweise von 30 bis 70, bevorzugter von 35 bis 65, bevorzugter von 40 bis 60, bevorzugter von 45 bis 55 und noch bevorzugter von 48 bis 52.

3.  Behandlungssystem gemäß Anspruch 1 oder 2, wobei die zweite Washcoatschicht eine kontinuierliche Schicht ist.

4.  Behandlungssystem gemäß einem der Ansprüche 1 bis 3, wobei die zweite Washcoatschicht ferner Metalloxid-Trägerpartikel umfasst, auf denen Rh zumindest teilweise getragen ist.

5.  Behandlungssystem gemäß einem der Ansprüche 1 bis 4, wobei die Metalloxid-Trägerpartikel wenigstens ein Metalloxid ausgewählt aus der Gruppe bestehend aus Aluminiumoxid, Zirkonoxid, Zirkonoxid-Aluminiumoxid, Bariumoxid-Aluminiumoxid, Lanthanoxid-Aluminiumoxid, Lanthanoxid-Zirkonoxid-Aluminiumoxid und Gemischen davon umfassen, wobei die Metalloxid- Trägerpartikel vorzugsweise Zirkonoxid-Aluminiumoxid und/oder Lanthanoxid-Aluminiumoxid umfassen, bevorzugter Zirkonoxid-Aluminiumoxid.

6.  Behandlungssystem gemäß einem der Ansprüche 1 bis 5, wobei das Stickstoffoxid-Speichermaterial wenigstens ein Element ausgewählt aus der Gruppe bestehend aus Li, Na, K, Rb, Cs, Mg, Ca, Sr, Ba, Ce, La, Pr, Nd und Gemischen davon umfasst, vorzugsweise wenigstens ein Element ausgewählt aus der Gruppe bestehend aus Mg, Ba, Ce und Gemischen davon, bevorzugter Ba und/oder Ce.

7.  Behandlungssystem gemäß einem der Ansprüche 1 bis 6, wobei das Stickstoffoxid-Speichermaterial eine Cerverbindung und eine Bariumverbindung umfasst, vorzugsweise Ceroxid und Bariumcarbonat, vorzugsweise in einem Ceroxid:Bariumcarbonat-Gewichtsverhältnis von 1:1 bis 1:20, bevorzugter von 1:2 bis 1: 15, bevorzugter von 1:3 bis 1:10 und noch bevorzugter von 1:3,5 bis 1:5.

8.  Behandlungssystem gemäß Anspruch 7, wobei das Bariumcarbonat wenigstens teilweise auf Partikeln getragen ist, die Ceroxid umfassen, wobei die erhaltenen Partikel vorzugsweise eine Partikelgröße ($d_{90}$) aufweisen, die in dem Bereich von 5 bis 20 $\mu$m liegt, vorzugsweise von 8 bis 14 $\mu$m, bevorzugter von 9 bis 13 $\mu$m und noch bevorzugter von 10 bis 12 $\mu$m.

9.  Behandlungssystem gemäß einem der Ansprüche 1 bis 8, wobei die erste Washcoatschicht ferner wenigstens ein Metall der Platingruppe ausgewählt aus der Gruppe bestehend aus Platin, Palladium, Iridium und Gemischen davon umfasst, wobei das wenigstens ein Metall der Platingruppe vorzugsweise wenigstens teilweise auf den Metalloxid-Trägerpartikeln getragen ist, wobei bevorzugter verschiedene Typen von Metallen der Platingruppe auf getrennten Metalloxid-Trägerpartikeln getragen sind.

10. Behandlungssystem gemäß Anspruch 9, wobei die erste Washcoatschicht Pd und/oder Pt umfasst, vorzugsweise Pd und Pt.

11. Behandlungssystem gemäß einem der Ansprüche 1 bis 10, wobei in der dritten Washcoatschicht enthaltene Pd wenigstens teilweise auf Metalloxid-Trägerpartikeln getragen ist, wobei die Metalloxid-Trägerpartikel vorzugsweise wenigstens ein Metalloxid ausgewählt aus der Gruppe bestehend aus Aluminiumoxid, Zirkonoxid, Zirkonoxid-Aluminiumoxid, Bariumoxid-Aluminiumoxid, Lanthanoxid-Aluminiumoxid, Lanthanoxid-Zirkonoxid-Aluminiumoxid und Gemischen davon umfassen, wobei die Metalloxid-Trägerpartikel bevorzugter Zirkonoxid-Aluminiumoxid und/oder Lanthanoxid-Aluminiumoxid umfassen, noch bevorzugter Zirkonoxid-Aluminiumoxid.

12. Behandlungssystem gemäß einem der Ansprüche 1 bis 11, wobei das Bienenwabensubstrat alternierende Einlass- und Auslassdurchgänge umfasst, wobei die Einlassdurchgänge ein offenes Einlassende und ein geschlossenes Auslassende aufweisen und die Auslassdurchgänge ein geschlossenes Einlassende und ein offenes Auslassende aufweisen.

13. Behandlungssystem gemäß einem der Ansprüche 1 bis 12, wobei die zweite Washcoatschicht eine kontinuierliche Schicht ist.

14. Behandlungssystem gemäß gemäß Anspruch 12 oder 13, wobei die erste Washcoatschicht, auf deren Oberfläche die dritte Washcoatschicht angeordnet ist, die erste Washcoatschicht der Auslassdurchgänge des Bienenwabensubstrats ist, wobei die dritte Washcoatschicht auf wenigstens einem Teil der ersten Washcoatschicht der Auslassdurchgänge des Bienenwabensubstrats angeordnet ist.


**Revendications**

1.  Système de traitement pour un flux de gaz d'échappement d'automobile, comprenant:

    un moteur à combustion dont le fonctionnement alterne périodiquement entre des conditions pauvres et des conditions riches;
    un conduit de gaz d'échappement en communication avec le moteur; et
    un catalyseur de stockage d'oxyde d'azote présent dans le conduit de gaz d'échappement, le catalyseur de stockage d'oxyde d'azote comprenant:

    un substrat,
    une première couche d'imprégnateur disposée sur le substrat, la première couche d'imprégnateur comprenant des particules d'oxyde métallique de support et un matériau de stockage d'oxyde d'azote comprenant au moins un composé métallique sélectionné dans le groupe constitué de composés de métaux alcalino-terreux, de composés de métaux alcalins, de composés de métaux des terres rares et de mélanges de ceux-ci, au moins une partie dudit au moins un composé métallique reposant sur les particules d'oxyde métallique de support; et

une deuxième couche d'imprégnateur disposée par-dessus la première couche d'imprégnateur, ladite deuxième couche d'imprégnateur comprenant du Rh,

dans lequel la première couche d'imprégnateur contient 0,001 % en poids ou moins de Rh, et

dans lequel la deuxième couche d'imprégnateur est disposée sur 100-x % de la surface de la première couche d'imprégnateur, x valant de 20 à 80, et

dans lequel le catalyseur de stockage d'oxyde d'azote comprend en outre une troisième couche d'imprégnateur qui comprend du Pd et qui est disposée sur au moins une partie de la première couche d'imprégnateur, sur laquelle la deuxième couche d'imprégnateur n'est pas disposée,

dans lequel la troisième couche d'imprégnateur contient 0,001 % en poids ou moins de Rh, et

dans lequel le substrat est un substrat nid d'abeilles comprenant une pluralité de passages s'étendant longitudinalement formés par des parois s'étendant longitudinalement délimitant et définissant lesdits passages, dans lequel la première couche d'imprégnateur sur 100-x % de la surface de laquelle la deuxième couche d'imprégnateur est disposée est la première couche d'imprégnateur des passages d'entrée du substrat nid d'abeilles, dans lequel la deuxième couche d'imprégnateur est disposée sur la première partie de ladite première couche d'imprégnateur s'étendant à partir de l'extrémité d'entrée du substrat nid d'abeilles (section avant).

2. Système de traitement selon la revendication 1, dans lequel la deuxième couche d'imprégnateur est disposée sur 100-x % de la surface de la première couche d'imprégnateur, x valant de 25 à 75, de préférablement de 30 à 70, plus préférablement de 35 à 65, plus préférablement de 40 à 60, plus préférablement de 45 à 55, et encore plus préférablement de 48 à 52.

3. Système de traitement selon la revendication 1 ou 2, dans lequel la seconde couche d'imprégnateur est une couche continue.

4. Système de traitement selon l'une quelconque des revendications 1 à 3, dans lequel la seconde couche d'imprégnateur comprend en outre des particules d'oxyde métallique de support sur lesquelles le Rh repose au moins en partie.

5. Système de traitement selon l'une quelconque des revendications 1 à 4, dans lequel les particules d'oxyde métallique de support comprennent au moins un oxyde métallique sélectionné dans le groupe constitué de l'alumine, de la zircone, de la zircone-alumine, de l'oxyde de baryum-alumine, de l'oxyde de lanthane-alumine, de l'oxyde de lanthane-zircone-alumine et de mélanges de ceux-ci, de préférablement dans lequel les particules d'oxyde métallique comprennent de la zircone-alumine et/ou de la lanthane-alumine, plus préférablement de la zircone-alumine.

6. Système de traitement selon l'une quelconque des revendications 1 à 5, dans lequel le matériau de stockage d'oxyde d'azote comprend au moins un élément sélectionné dans le groupe constitué de Li, Na, K, Rb, Cs, Mg, Ca, Sr, Ba, Ce, La, Pr, Nd, et de mélanges de ceux-ci, préférablement au moins un élément sélectionné dans le groupe constitué de Mg, Ba, Ce, et de mélanges de ceux-ci, plus préférablement Ba et/ou Ce.

7. Système de traitement selon l'une quelconque des revendications 1 à 6, dans lequel le matériau de stockage d'oxyde d'azote comprend un composé de cérium et un composé de baryum, préférablement d'oxyde de cérium et de carbonate de baryum, préférablement selon un rapport pondéral oxide de cérium:carbonate de baryum de 1: 1 à 1:20, préférablement de 1:2 à 1:15, plus préférablement de 1:3 à 1:10, et encore plus préférablement de 1:3,5 à 1:5.

8. Système de traitement selon la revendication 7, dans lequel le carbonate de baryum repose au moins en partie sur des particules comprenant de l'oxyde de cérium, dans lequel les particules ainsi obtenues ont préférablement une taille de particule ($d_{90}$) de 5 à 20 $\mu$m, préférablement de 8 à 14 $\mu$m, plus préférablement de 9 à 13 $\mu$m, et encore plus préférablement de 10 à 12 $\mu$m.

9. Système de traitement selon l'une quelconque des revendications 1 à 8, dans lequel la première couche d'imprégnateur comprend en outre au moins un métal du groupe du platine sélectionné dans le groupe constitué par le platine, le palladium, l'iridium et de mélanges de ceux-ci, dans lequel ledit au moins un métal du groupe du platine repose préférablement au moins en partie sur les particules d'oxyde métallique de support, plus préférablement dans lequel différents types de métaux du groupe du platine reposent sur des particules distinctes d'oxyde métallique de support.

10. Système de traitement selon la revendication 9, dans lequel la première couche d'imprégnateur comprend du Pd et/ou du Pt, de préférablement du Pd et du Pt.

11. Système de traitement selon l'une quelconque des revendications 1 à 10, dans lequel le Pd présent dans la troisième couche d'imprégnateur repose au moins en partie sur les particules d'oxyde métallique de support, dans lequel les particules d'oxyde métallique de support comprennent de préférablement au moins un oxyde métallique sélectionné dans le groupe constitué de l'alumine, de la zircone, de la zircone-alumine, de baryum-alumine, de l'oxyde lanthane-alumine, de l'oxyde lanthane-zircone-alumine, et de mélanges de ceux-ci, plus préférablement dans lequel les particules d'oxyde métallique de support comprennent de la zircone-alumine et/ou de l'oxyder de lanthane-alumine, et encore plus préférablement de la zircone-alumine.

12. Système de traitement selon l'une quelconque des revendications 1 à 11, dans lequel le substrat nid d'abeilles comprend des passages d'entrée et de sortie alternés, lesdits passages d'entrée ayant une extrémité d'entrée ouverte et une extrémité de sortie fermée, et lesdits passages de sortie ayant une extrémité d'entrée fermée et une extrémité de sortie ouverte.

13. Système de traitement selon l'une quelconque des revendications 1 à 12, dans lequel la deuxième couche d'imprégnateur est une couche continue.

14. Système de traitement selon la revendication 12 ou 13, dans lequel la première couche d'imprégnateur sur la surface de laquelle la troisième couche d'imprégnateur est disposée est la première couche d'imprégnateur des passages de sortie du substrat nid d'abeilles, ladite troisième couche d'imprégnateur étant disposée sur au moins une partie de ladite première couche d'imprégnateur des passages de sortie du substrat nid d'abeilles.

**Fig. 1**

**Fig. 2**

**Fig. 3**

Fig. 4

Fig. 5

**Fig. 6**

**EP 2 579 983 B2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008067375 A
- US 2009320457 A1
- US 2005129601 A1
- US 6413483 B1
- US 2003103886 A1